# EUROPEAN PATENT SPECIFICATION

(11) **EP 4 257 707 B1**
(45) Date of publication and mention of the grant of the patent: **26.11.2025**
(21) Application number: 22184352.7
(22) Date of filing: 12.07.2022
(51) Int. Cl.: C21B 13/00, C22B 7/00, C22B 7/04, C22B 15/00

(54) **COUPLING SYSTEM OF COPPER SLAG RECYCLING AND CO2 MINERALIZATION BASED ON INDUSTRIAL SOLID WASTE**
KUPPLUNGSSYSTEM ZUR RECYCELN VON KUPFERSCHLACKE UND CO2-MINERALISIERUNG AUF BASIS FESTER INDUSTRIEABFÄLLE
SYSTÈME D'ASSOCIATION DU RECYCLAGE DES SCORIES DE CUIVRE ET DE LA MINÉRALISATION DU CO2 BASÉ SUR LES DÉCHETS SOLIDES INDUSTRIELS

(30) Priority: 08.04.2022 CN 202210367824
(43) Date of publication of application: 11.10.2023
(73) Proprietor: Greenore Holding Co., Wilmington, DE 19801, County of New Castle (US)
(72) Inventor: ZHOU, Xiaozhou, Shanghai, 201108 (CN); ZHANG, Yunfeng, Shanghai, 201108 (CN); CUI, Rui, Shanghai, 201108 (CN)
(74) Representative: Gevers Patents

(56) References cited:
- WO-A1-2011/047070
- CN-A- 106 422 716

## Description

### Technical field

The application belongs to the field of hydrometallurgy technology, carbon capture, utilization and storage (CCUS), and resource utilization of solid waste, specifically relating to the coupling system of copper slag recycling and CO₂ mineralization based on industrial solid waste.

### Background

Copper metallurgy is an important industry in the field of non-ferrous metals in China. The development of copper metallurgy has focused on clean copper metallurgy methods, comprehensive recovery of valuable metals and effective utilization of resources. Copper slag, produced in the process of copper smelting, is a kind of non-ferrous metal slag. The waste slag discharged from copper smelting by reverberatory furnace method is copper slag of reverberatory furnace, and the slag discharged from copper smelting by blast furnace is copper slag of blast furnace. For each ton of copper produced, the reverberatory furnace method will produce 10-20 tons of slag and the blast furnace method will produce 50-100 tons of copper slag. The main mineral in the slag is iron-bearing mineral, and the grade of iron generally exceeds 40%, which is much higher than 29.1%, the average industrial grade of iron ore. It has been a focus of all relevant technicians to discover techniques to efficiently recycle these copper slags. Rotary hearth furnace process is a direct reduction process evolved from the process of steel rolling annular heating furnace in the recent 40 years. It has the advantages of fast reaction kinetics and a wide adaptability of raw materials. There is also a relatively novel oxygen-enriched bottom blowing bath smelting process, which has the advantage of cleanness and high efficiency.

Although the above processes have their own advantages, they haven't been widely applied because of their obvious shortcomings. The flue gas treatment of rotary hearth furnace technology is a thorny problem. Due to the low melting point of zinc, lead, potassium and other substances, the flue gas characteristics of rotary hearth furnace are quite different from conventional metallurgical flue gas, making it difficult to treat and recycle. Two rotary hearth furnaces in China have retrofitted their flue gas systems only less than a year after operation. In addition, the composition of feed stock of rotary hearth furnace is complex. If the furnace is frequently started and shut down, corrosion will also accelerate, restraining a continuous production. It's reported that two cases of furnace roof collapse occurred in a rotary hearth furnace in less than one year of production. Compared with the rotary hearth furnace process, the oxygen-enriched bottom blowing bath smelting process is relatively novel. However, such novel method is faced with the issues of weak fundamental research and a low level of automation, and therefore a long way is still needed for this method to be fully applied in practical productions. Patent document WO 2011/047070 A further discloses an alternative copper slag recycling system.

### Summary

In view of the shortcomings or deficiencies of the above existing technologies, this invention is to provide a coupling system of copper slag recycling and CO₂ mineralization process based on industrial solid waste.

In order to solve the above technical problems, this invention is realized through the following technical schemes.

This invention proposes a coupling system of copper slag recycling and CO₂ mineralization based on industrial solid waste, as disclosed in appended claims 1-10.

Compared with the prior art, the application has the following technical effects.

The invention realizes the separation and desulfurization of raw materials through slag forming and other treatments of copper slag, which not only ensures the purity and quality of products, but also enables a green and efficient production. Moreover, the invention can couple the recycling of copper slag with the existing CO₂ mineralization process based on industrial solid waste. Various production lines can be organically integrated in a green and clean manner for both reforming slag and flue gas. At the same time, the selection range and acquisition mode of CO₂ source are expanded for CO₂ mineralization process based on industrial solid waste, and the engineering cost of CO₂ mineralization process based on industrial solid waste is reduced.

The carbonate products produced from the CO₂ mineralization process based on industrial solid waste can be partially recycled to the slag forming treatment process, as slag forming agent or a supplement to the slag forming agent that needs to be added. In this way, another internal circulation system is constructed. Compared with the prior art, the circulation process is advantageous in that the calcium and magnesium elements in the existing industrial solid waste can be fully utilized, and the resources can be well reused. The internal circulation process can also ensure the continuity of the reaction process and improve the reaction efficiency.

### BRIEF DESCRIPTION OF THE DRAWINGS

To explicitly illustrate the characteristics, purposes, and advantages of this invention, a brief description of the drawings is presented.
**FIG. 1****:** block diagram of the coupling system of copper slag recycling and CO₂ mineralization process based on industrial solid waste in an embodiment of the invention.
**FIG. 2****:** block diagram of the coupling system of copper slag recycling and CO₂ mineralization process based on industrial solid waste in an embodiment of the invention.
**FIG. 3****:** block diagram of the coupling system of copper slag recycling and CO₂ mineralization process based on industrial solid waste in another embodiment of the invention.
**FIG. 4****:** block diagram of CO₂ mineralization device based on industrial solid waste in an embodiment of the invention.

### DESCRIPTION OF THE EMBODIMENTS

The technical scheme in the embodiment of the invention will be described clearly and comprehensively in combination with the attached drawings in the embodiment of the invention. Obviously, the described embodiments are only part of all the embodiments of the invention. Based on the embodiments in the invention, all other embodiments obtained by technicians belong to the scope of protection of this application, unless other creative breakthrough can distinguish its work significantly and fundamentally different from this technology.

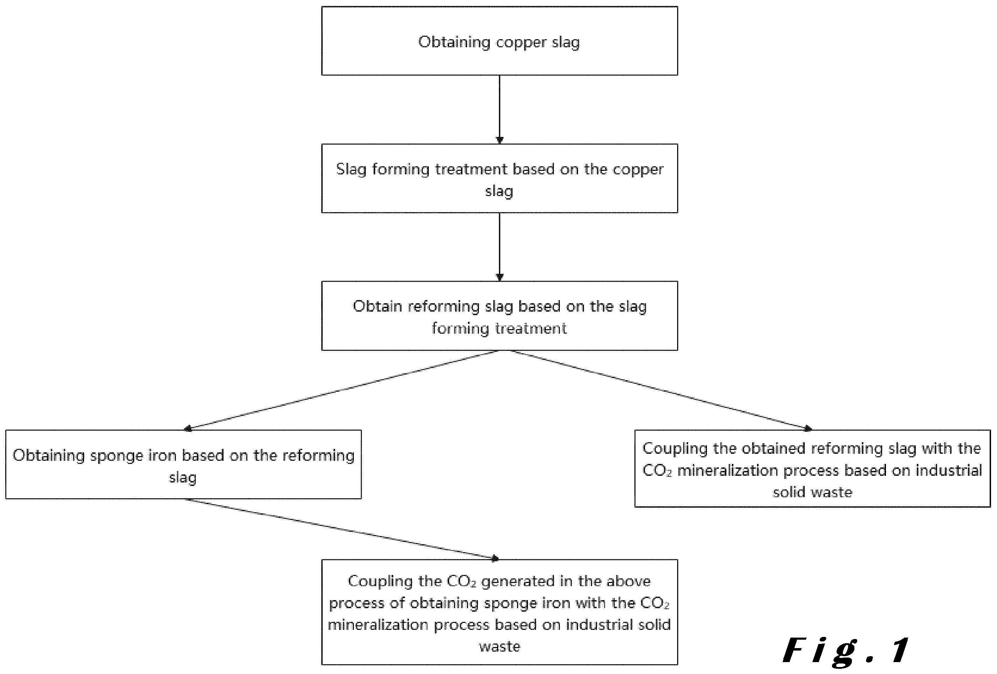

As shown in **Fig. 1****,** in one embodiment of the invention, the coupling system of copper slag recycling and CO₂ mineralization process based on industrial solid waste includes the following steps:
Step 1, obtaining copper slag;
Step 2: performing slag forming treatment based on the copper slag;
Step 3: obtaining reforming slag based on the slag forming treatment;
Step 4: obtaining sponge iron based on the reforming slag;
Step 5: coupling the obtained reforming slag with the CO₂ mineralization process based on industrial solid waste;
Step 6, coupling the CO₂ generated in the process of obtaining sponge iron with the CO₂ mineralization process based on industrial solid waste.

In this embodiment, the separation and desulfurization of raw materials are realized through slag forming and other treatments of copper slag, which not only ensures the purity and quality of products, but also enables a green and efficient production. Moreover, the invention can couple the recycling of copper slag with the existing CO₂ mineralization process based on industrial solid waste. Various production lines can be organically integrated in a green and clean manner for both reforming slag and flue gas. At the same time, the selection range and acquisition mode of CO₂ source are expanded for CO₂ mineralization process based on industrial solid waste, and the engineering cost of CO₂ mineralization process based on industrial solid waste is reduced.

Wherein, the above reaction steps, as one of the examples, can be carried out continuously or simultaneously in the actual production process.

In this embodiment, the slag forming treatment based on copper slag includes but is not limited to treatments such as melting.

In order to further realize the internal circulation and reuse of resources, the CO₂ generated in the slag forming treatment process is preferably coupled with the CO₂ mineralization process based on industrial solid waste. In this embodiment, in addition to the CO₂ produced in the process of obtaining sponge iron as one of the CO₂ source in the CO₂ mineralization process based on industrial solid waste, the CO₂ produced in the slag forming process can also be used as another way to obtain CO₂ in the CO₂ mineralization process based on industrial solid waste.

Furthermore, in the specific implementation process, the CO₂ source of the CO₂ mineralization process based on industrial solid waste can also come from power plant flue gas, blast furnace, converter, refining furnace, lime kiln flue gas, coal chemical tail gas or petrochemical tail gas. The content of carbon dioxide is between 15% - 98%.

Furthermore, the carbonate products produced from the CO₂ mineralization process based on industrial solid waste is partially recycled to the slag forming treatment process, as slag forming agents or a supplement to the slag forming agent that need to be added, such as limestone. In this way, another internal circulation system is constructed. Compared with the prior art, the circulation process is advantageous in that the calcium and magnesium elements in the existing industrial solid waste can be fully utilized, and the resources can be well reused. The internal circulation process can also ensure the continuity of the reaction process and improve the reaction efficiency.

The above method for obtaining sponge iron based on the reforming slag also includes a step of inputting syngas or CO or H₂ or a mixture of CO and H₂. In the direct reduction iron process, the as-mentioned gas reacts with the reforming slag to obtain high-purity sponge iron.

In order to treat the SiO₂ and sulfur-bearing substances during the iron making and slag making process, slag forming treatment is generally carried out by applying slag forming agents (such as limestone or carbonate product in this embodiment). The as-mentioned substances react with limestone to form calcium silicate, calcium sulfide, etc. (The reforming slag described below includes but is not limited to calcium silicate, calcium sulfide, etc.). The above substances and carbonate products react to generate calcium silicate, magnesium silicate or calcium magnesium silicate. When sulfur is present, the reaction products also include calcium sulfide, magnesium sulfide or calcium magnesium sulfide. Therefore, before the reforming slag is coupled with the CO₂ mineralization process based on industrial solid waste, a desulfurization treatment of the reforming slag is included, to reduce the impact of sulfur on the CO₂ mineralization process based on industrial solid waste. Notably, the above desulfurization treatment is not necessary if the reforming slag does not contain sulfur or the content of sulfur is very low. The configuration of desulfurization treatment depends on the specific composition of raw materials.

Furthermore, the above CO₂ mineralization process based on industrial solid waste includes the following steps:
a mixed reaction process, where the industrial solid waste, auxiliary reagent and CO₂ are reacted in the mixed reaction device;
a solid-liquid separation treatment, where the slurry generated by the above mixing reaction is subjected to a solid-liquid separation.
a process where the supernatant and unreacted solid particles are obtained.

The industrial solid waste includes but is not limited to steel slag, raw ore materials or tailings, other industrial wastes, etc. The raw ore materials include calcium magnesium ores. Other industrial wastes include iron slag, fly ash, bottom ash, red mud, construction waste/waste cement, tailings, etc.

A carbonate product is prepared based on the obtained supernatant, wherein the carbonate product includes calcium carbonate, magnesium carbonate or calcium magnesium carbonate. The carbonate products partially participate in the slag forming treatment, as slag forming agents or as a supplement to slag forming agents (such as limestone) that need to be added, resulting in another internal circulation system.

Furthermore, the unreacted solid particles are recycled to the mixed reaction process, to fully extract and reuse the effective components in the unreacted solid particles.

The auxiliary reagent comprises at least one organic acid, or one salt based on an organic acid radical or a combination of both. The organic acid includes but is not limited to oxalic acid, citric acid, picolinic acid, gluconic acid, glutamic acid, formic acid, acetic acid, propionic acid, butyric acid, valeric acid, lactic acid, succinic acid, phosphoric acid, pyrophosphoric acid, ascorbic acid or phthalic acid. In this embodiment, by adjusting the pressure of carbon dioxide, the proportion of auxiliary reagents and the reaction temperature, the use of strong acid or highly corrosive acid (nitric acid, hydrochloric acid, sulfuric acid, and hydrofluoric acid) is avoided, and a continuous leaching of the target component is realized.

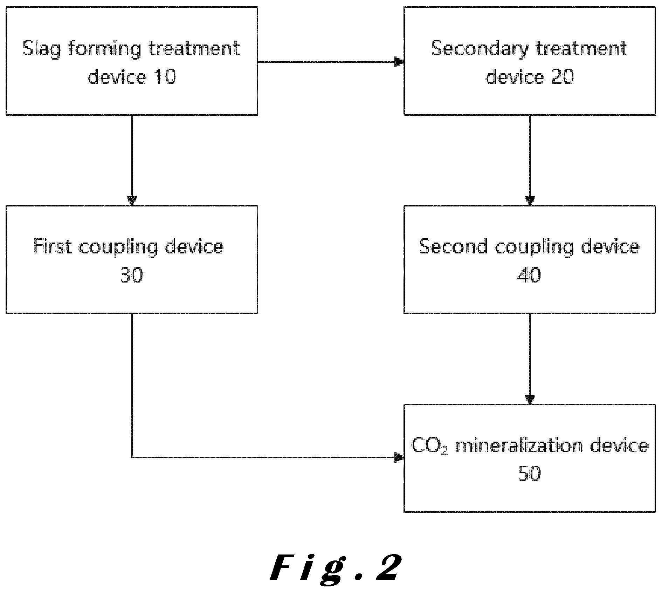

As shown in **Fig. 2****,** this embodiment also proposes a coupling system of copper slag recycling and CO₂ mineralization process based on industrial solid waste, including:
a slag forming treatment device **10,** which is used to obtain reforming slag from the copper slag;
a secondary treatment device **20,** which is employed for secondary treatment of the reforming slag to obtain sponge iron;
a first coupling device **30,** which is designed to convey the obtained reforming slag to the CO₂ mineralization device **50** based on industrial solid waste;
a second coupling device **40,** which is configured to transport the CO₂ generated by the secondary treatment device **20** to the CO₂ mineralization device **50** based on industrial solid waste.

The technical features of this coupling system have been described above and will not be repeated here.

In this embodiment, a dual internal circulation can be achieved through the first coupling device **30** and the second coupling device **40,** and the recycling of copper slag can be coupled with the existing CO₂ mineralization process based on industrial solid waste. Various production lines can be organically integrated for both reforming slag and flue gas, leading to a green and clean production.

The first coupling device **30** also transports the CO₂ generated by the slag forming treatment device **10** to the CO₂ mineralization device based on industrial solid waste.

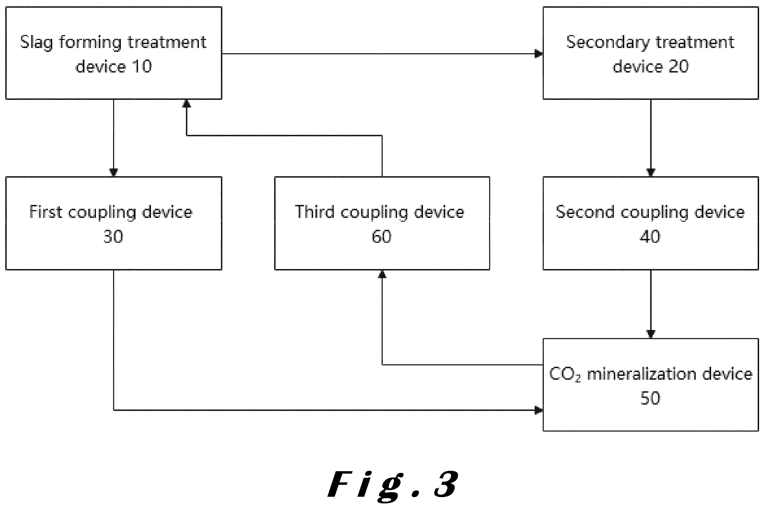

As shown in **Fig. 3****,** the system also includes a third coupling device **60,** which is used to transport part of the carbonate products generated by the CO₂ mineralization device **50** based on industrial solid waste to the slag forming treatment device **10.** Based on the first coupling device **30** and the second coupling device **40,** the third coupling device **60** is additionally configured to realize a triple internal circulation. The third coupling device **60** can recycle part of the carbonate products prepared by the CO₂ mineralization process based on industrial solid waste to the slag forming treatment process, as slag forming agents or a supplement to the slag forming agents that need to be added. This circulation process is advantageous in that the calcium and magnesium elements in the existing industrial solid waste can be fully utilized, and the resources can be well reused. The internal circulation process can also ensure the continuity of the reaction process and improve the reaction efficiency.

This embodiment also includes a desulfurization device, which is used to desulfurize the reforming slag before it moves into to the CO₂ mineralization device **50** based on industrial solid waste. Notably, the desulfurization treatment is not necessary if the reforming slag does not contain sulfur or the content of sulfur is very low. The configuration of desulfurization treatment depends on the specific composition of raw materials.

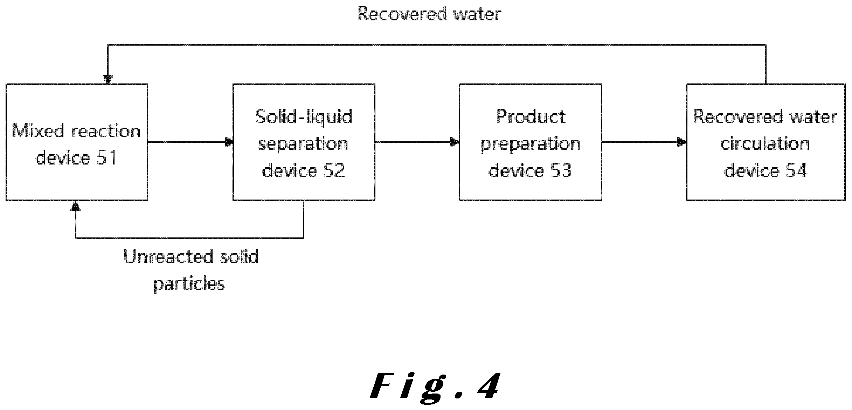

In this embodiment, as shown in **Fig. 4****,** the CO₂ mineralization device **50** based on industrial solid waste includes:
a mixed reaction device **51,** where the industrial solid waste, auxiliary reagent and CO₂ are reacted in the mixed reaction device **51;**
a solid-liquid separation device **52,** where the slurry generated by the above mixing reaction is subjected to a solid-liquid separation.

Through the above mixing reaction, solid-liquid separation and other processes, the target carbonate products can be obtained, such as calcium carbonate, magnesium carbonate or calcium magnesium carbonate.

This embodiment also includes a product preparation device **53** for producing carbonate products based on the clear liquid phase after the solid-liquid separation device **52.** The clear liquid contains target ions, such as calcium ions, magnesium ions or a mixture of both. The target product is calcium magnesium carbonate, calcium carbonate or magnesium carbonate.

The embodiment also includes a recovered water circulation device 54. After the clear liquid phase generates the products, the recovered water is circulated to the mixed reaction device **51** through the recovered water circulation device **54,** and the recovered water will be circulated at least two times (m≥ 2).

Furthermore, the mixing reaction device **51** is also continuously fed with steel slag, auxiliary reagent and water at a certain proportion, and the slurry is obtained after well mixing. Carbon dioxide is continuously injected into the mixed reaction device **51** under a certain pressure and reacts with the slurry. The reacted slurry is continuously discharged out of the mixed reaction device **51.** The steel slag can also be replaced with other industrial wastes, such as iron slag, fly ash, bottom ash, red mud, construction waste/waste cement, tailings, etc. The steel slag can also be replaced with raw ore materials or tailings, and the raw ore materials include calcium magnesium ores.

The specific classification of the auxiliary reagent is described above. In this embodiment, by adjusting the pressure of carbon dioxide, the proportion of auxiliary reagents and the reaction temperature, the use of strong acid or highly corrosive acid (nitric acid, hydrochloric acid, sulfuric acid, and hydrofluoric acid) is avoided, and a continuous leaching of the target component is realized.

The slurry out of the mixing reaction device **51** is subjected to at least one stage of solid-liquid separation treatment through the solid-liquid separation device **52,** and the unreacted solid particles obtained from the solid-liquid separation will be recycled as raw materials for the next stage of reaction and separation.

Wherein, the solid-liquid separation device **52** preferably adopts a two-stage solid-liquid separation configuration. Specifically, the solid-liquid separation device **52** includes a primary coarse separation unit and a secondary fine separation unit. The primary coarse separation unit is used to remove particle of sizes ≥ 5-10 µm in diameter. The secondary fine separation unit is used to remove solid particles with a particle size ≤ 1-5 µm in diameter. Through the multi-stage separation, the optimized separation scheme for particles of different sizes ensures that the solid-liquid separation can be carried out stably and continuously under the optimal load conditions. Such configuration effectively shortens the overall separation time, prolongs the stable operation of the separation system, and effectively avoids the technical problems caused by a single-stage separation.

Further preferably, the solid-liquid separation device **52** is also provided with a three-stage solid-liquid separation unit based on the two-stage solid-liquid separation. In this setup, the clear liquid phase containing target ions can be obtained by a disc centrifuge, a plate and frame filter press or a filter. The clear liquid containing the target ions is transported to the product preparation device **53.**

Wherein, when the clear liquid phase contains a high concentration of iron elements, the iron hydroxide precipitation is collected through enrichment and in this way, the irons can be reasonably and effectively recovered and utilized.

The above embodiments are only used to illustrate the technical scheme of the invention with reference to the preferred embodiments, but the invention is not limited by these embodiments. It should be understood by technicians in this field that the embodiments of the present invention can be modified or equivalently replaced without departing from the claims of the invention.

## Claims

1. A CO₂ mineralization process of industrial solid waste, comprising the following steps:
(a) mixing of industrial solid waste, auxiliary reagent, and water thereby obtaining a slurry,
(b) continuously injecting CO₂ into the slurry under a certain pressure, thereby forming carbonate products,
(c) solid-liquid separation of the slurry with CO₂ injection obtained in step (b), thereby obtaining a supernatant and unreacted solid particles,
wherein the industrial solid waste comprises steel slag, raw ore materials or tailings comprising calcium or magnesium ores, iron slag, fly ash, bottom ash, red mud, construction waste, waste cement or a combination thereof, and wherein the auxiliary reagent comprises at least one organic acid, or one salt comprising an organic acid radical or a combination thereof,
**characterized in that** the process further includes the following steps:
(d) providing a copper slag, produced in the process of copper smelting and comprising iron;
(e) performing a slag forming treatment on the copper slag by addition of the carbonate products, formed in step (b), as slag forming agent or as a supplement to the slag forming agent; thereby obtaining a reforming slag,
(f) desulfurization of the reforming slag obtained in step (e),
(g) inputting syngas or CO or H₂ or a mixture of CO and H₂; thereby obtaining a sponge iron from the reforming slag;
(h) injecting at least part of the CO₂ generated in step (e) or (g) to step (b) so as to contribute to the CO₂ injected into the slurry in step (b).

2. The process according to **claim 1**, wherein the CO₂ produced in step (e) is injected in step (b).

3. The process according to **claim 1 or 2** wherein the carbonate products obtained from the CO₂ mineralization process of industrial solid waste are partially recycled and participate in step (e).

4. The process according to any one of **claim 1-3,** further comprising a step (i) of preparing carbonate products based on the supernatant obtained in step (c) and the unreacted solid particles are recycled in step (a).

5. The process according to **claim 3**, wherein the carbonate product comprises calcium carbonate, magnesium carbonate or calcium magnesium carbonate.

6. A system comprising:
- A CO₂ mineralization device (50) of industrial solid waste comprising:
- a mixed reaction device (51), where the industrial solid waste, auxiliary reagent and CO₂ are reacted:
- a solid-liquid separation device (52), where the slurry generated in the above mixed reaction device (51) is subjected to a solid-liquid separation,
**characterized in that** it further comprises:
- a slag forming treatment device (10), which is used to obtain reforming slag from the copper slag;
- a desulfurization device, which is used to desulfurize the reforming slag before it moves into to the CO₂ mineralization device (50) of industrial solid waste;
- a secondary treatment device (20), which is employed for secondary treatment of the reforming slag to obtain sponge iron;
- a first coupling device (30), which is designed to convey the obtained reforming slag to the CO₂ mineralization device (50) of industrial solid waste;
- a second coupling device (40), which is configured to transport the CO₂ generated by the secondary treatment device (20) to the CO₂ mineralization device (50) of industrial solid waste.

7. The system according to **claim 8**, wherein the first coupling device (30) also transports the CO₂ generated by the slag forming treatment device (10) to the CO₂ mineralization device (50) of industrial solid waste.

8. The system according to **claim 8 or 9**, comprising a third coupling device (60), which is used to transport part of the carbonate products generated by the CO₂ mineralization device (50) of industrial solid waste to the slag forming device (10).

9. The system according to **claim 8 or 9 or 10** comprising a desulfurization device, which is used to desulfurize the reforming slag before it moves into to the CO₂ mineralization device (50) of industrial solid waste.

10. The system according to any one of **claims 6-9,** comprising a product preparation device (53) for producing carbonate products based on the clear liquid phase after the solid-liquid separation device (52).

## Patentansprüche

1. CO₂-Mineralisierungsprozess von festen Industrieabfällen, der die folgenden Schritte umfasst:
(a) Mischen von festen Industrieabfällen, einem Hilfsreagenz und Wasser, wodurch eine Aufschlämmung erhalten wird,
(b) kontinuierliches Einspritzen von CO₂ in die Aufschlämmung unter einem bestimmten Druck, wodurch Carbonatprodukte gebildet werden,
(c) Fest-Flüssig-Trennung der in Schritt (b) erhaltenen Aufschlämmung durch CO₂-Injektion, wodurch ein Überstand und nicht umgesetzte Feststoffpartikel erhalten werden, wobei die festen Industrieabfälle Stahlschlacke, Roherzmaterialien oder Rückstände, die Calcium- oder Magnesiumerze umfassen, Eisenschlacke, Flugasche, Bodenasche, Rotschlamm, Bauschutt, Zementabfall oder eine Kombination davon umfasst, und wobei das Hilfsreagenz mindestens eine organische Säure oder ein Salz, das ein organisches Säureradikal umfasst, oder eine Kombination davon umfasst,
**dadurch gekennzeichnet, dass** der Prozess weiter die folgenden Schritte einschließt:
(d) Bereitstellen einer Kupferschlacke, die im Prozess des Kupferschmelzens hergestellt wird und Eisen umfasst;
(e) Durchführen einer Schlackenbildungsbehandlung an der Kupferschlacke durch Zugabe der in Schritt (b) gebildeten Carbonatprodukte als Schlackenbildner oder als Ergänzung zum Schlackenbildner; wodurch eine Reformierungsschlacke erhalten wird,
(f) Entschwefeln der in Schritt (e) erhaltenen Reformierungsschlacke,
(g) Einspeisen von Synthesegas oder CO oder H₂ oder einer Mischung aus CO und H₂; wodurch aus der Reformierungsschlacke ein Eisenschwamm erhalten wird;
(h) Einspritzen von mindestens einem Teil des in Schritt (e) oder (g) erzeugten CO₂ in Schritt (b), um so zu dem in Schritt (b) in die Aufschlämmung eingespritzten CO₂ beizutragen.

2. Prozess nach Anspruch 1, wobei das in Schritt (e) hergestellte CO₂ in Schritt (b) eingespritzt wird.

3. Prozess nach Anspruch 1 oder 2, wobei die aus dem CO₂-Mineralisierungsprozess von festen Industrieabfällen erhaltene Carbonatprodukte teilweise zurückgeführt werden und an Schritt (e) teilnehmen.

4. Prozess nach einem Anspruch 1-3, der weiter einen Schritt (i) zur Aufbereitung von Carbonatprodukten auf der Grundlage des in Schritt (c) erhaltenen Überstands umfasst, wobei die nicht umgesetzten Feststoffpartikel in Schritt (a) zurückgeführt werden.

5. Prozess nach Anspruch 3, wobei das Carbonatprodukt Calciumcarbonat, Magnesiumcarbonat oder Calciummagnesiumcarbonat umfasst.

6. System, umfassend:
- eine CO₂-Mineralisierungsvorrichtung (50) für feste Industrieabfälle, umfassend:
- eine Mischreaktionsvorrichtung (51), in der die festen Industrieabfälle, das Hilfsreagenz und CO₂ umgesetzt werden;
- eine Fest-Flüssig-Trennvorrichtung (52), in der die in der obigen Mischreaktionsvorrichtung (51) erzeugte Aufschlämmung einer Fest-Flüssig-Trennung unterzogen wird,
**dadurch gekennzeichnet, dass** es weiter umfasst;
- eine Schlackenbildungsbehandlungsvorrichtung (10), die verwendet wird, um aus der Kupferschlacke Reformierungsschlacke zu erhalten;
- eine Entschwefelungsvorrichtung, die zum Entschwefeln der Reformierungsschlacke verwendet wird, bevor diese in die CO₂-Mineralisierungsvorrichtung (50) für feste Industrieabfälle gelangt;
- eine Sekundärbehandlungsvorrichtung (20), die zur Sekundärbehandlung der Reformierungsschlacke zum Erhalten von Eisenschwamm eingesetzt wird;
- eine erste Kopplungsvorrichtung (30), die dazu vorgesehen ist, die erhaltene Reformierungsschlacke zu der CO₂-Mineralisierungsvorrichtung (50) für feste Industrieabfälle zu befördern;
- eine zweite Kopplungsvorrichtung (40), die dazu konfiguriert ist, das von der Sekundärbehandlungsvorrichtung (20) erzeugte CO₂ zu der CO₂-Mineralisierungsvorrichtung (50) für feste Industrieabfälle zu transportieren.

7. System nach Anspruch 8, wobei die erste Kopplungsvorrichtung (30) auch das von der Schlackenbildungsbehandlungsvorrichtung (10) erzeugte CO₂ zur CO₂-Mineralisierungsvorrichtung (50) für feste Industrieabfälle transportiert.

8. System nach Anspruch 8 oder 9, umfassend eine dritte Kopplungsvorrichtung (60), die verwendet wird, um einen Teil der von der CO₂-Mineralisierungsvorrichtung (50) für feste Industrieabfälle erzeugten Carbonatprodukte zur Schlackenbildungsvorrichtung (10) zu transportieren.

9. System nach Anspruch 8 oder 9 oder 10, umfassend eine Entschwefelungsvorrichtung, die zum Entschwefeln der Reformierungsschlacke verwendet wird, bevor diese in die CO₂ -Mineralisierungsvorrichtung (50) für feste Industrieabfälle gelangt.

10. System nach einem der Ansprüche 6-9, umfassend eine Produktaufbereitungsvorrichtung (53) zum Herstellen von Carbonatprodukten auf der Grundlage der Klarflüssigkeitsphase nach der Fest-Flüssig-Trennvorrichtung (52).

## Revendications

1. Processus de minéralisation de CO₂ de déchets solides industriels, comprenant les étapes suivantes :
(a) le mélange de déchets solides industriels, de réactifs auxiliaires et d'eau, obtenant ainsi une suspension,
(b) l'injection en continu de CO₂ dans la suspension sous une certaine pression, formant ainsi des produits carbonatés,
(c) la séparation solide-liquide de la suspension avec l'injection de CO₂ obtenue à l'étape (b), obtenant ainsi un surnageant et des particules solides n'ayant pas réagi, dans lequel les déchets solides industriels comprennent des scories d'acier, des matières premières minérales ou des résidus comprenant des minerais de calcium ou de magnésium, des scories de fer, des cendres volantes, des cendres résiduelles, des boues rouges, des déchets de construction, des déchets de ciment ou une combinaison de ceux-ci, et dans lequel le réactif auxiliaire comprend au moins un acide organique, ou un sel comprenant un radical d'acide organique ou une combinaison de ceux-ci,
**caractérisé en ce que** le processus inclut en outre les étapes suivantes :
(d) la fourniture de scories de cuivre, produites dans le processus de fusion de cuivre et comprenant du fer ;
(e) la réalisation d'un traitement de formation de scories sur les scories de cuivre par addition des produits carbonatés, formés à l'étape (b), comme agent de formation de scories ou comme supplément à l'agent de formation de scories ; obtenant ainsi des scories de reformage,
(f) la désulfuration des scories de reformage obtenues à l'étape (e),
(g) l'introduction de gaz de synthèse ou de CO ou de H₂ ou d'un mélange de CO et de H₂ ; obtenant ainsi une éponge de fer à partir des scories de reformage ;
(h) l'injection d'au moins une partie du CO₂ généré à l'étape (e) ou (g) à l'étape (b) de manière à contribuer au CO₂ injecté dans la suspension à l'étape (b).

2. Processus selon la revendication 1, dans lequel le CO₂ produit à l'étape (e) est injecté à l'étape (b).

3. Processus selon la revendication 1 ou 2, dans lequel les produits carbonatés obtenus à partir du processus de minéralisation de CO₂ de déchets solides industriels sont partiellement recyclés et participent à l'étape (e).

4. Processus selon l'une quelconque des revendications 1-3, comprenant en outre une étape (i) de préparation de produits carbonatés sur la base du surnageant obtenu à l'étape (c) et les particules solides n'ayant pas réagi sont recyclées à l'étape (a).

5. Processus selon la revendication 3, dans lequel le produit carbonaté comprend du carbonate de calcium, du carbonate de magnésium ou du carbonate de calcium et de magnésium.

6. Système comprenant :
- un dispositif de minéralisation de CO₂ (50) de déchets solides industriels comprenant :
- un dispositif de réaction mixte (51), où les déchets solides industriels, le réactif auxiliaire et le CO₂ sont mis en réaction ;
- un dispositif de séparation solide-liquide (52), où la suspension générée dans le dispositif de réaction mixte ci-dessus (51) est soumise à une séparation solide-liquide,
**caractérisé en ce qu'**il comprend en outre :
- un dispositif de traitement de formation de scories (10), qui est utilisé pour obtenir des scories de reformage à partir des scories de cuivre ;
- un dispositif de désulfuration, qui est utilisé pour désulfurer les scories de reformage avant qu'elles ne passent dans le dispositif de minéralisation de CO₂ (50) des déchets solides industriels ;
- un dispositif de traitement secondaire (20), qui est utilisé pour le traitement secondaire des scories de reformage pour obtenir de l'éponge de fer ;
- un premier dispositif de couplage (30), qui est conçu pour transporter les scories de reformage obtenues vers le dispositif de minéralisation de CO₂ (50) des déchets solides industriels ;
- un deuxième dispositif de couplage (40), qui est configuré pour transporter le CO₂ généré par le dispositif de traitement secondaire (20) vers le dispositif de minéralisation de CO₂ (50) de déchets solides industriels.

7. Système selon la revendication 8, dans lequel le premier dispositif de couplage (30) transporte également le CO₂ généré par le dispositif de traitement de formation de scories (10) vers le dispositif de minéralisation de CO₂ (50) de déchets solides industriels.

8. Système selon la revendication 8 ou 9, comprenant un troisième dispositif de couplage (60), qui est utilisé pour transporter une partie des produits carbonatés générés par le dispositif de minéralisation de CO₂ (50) de déchets solides industriels vers le dispositif de formation de scories (10).

9. Système selon la revendication 8 ou 9 ou 10, comprenant un dispositif de désulfuration, qui est utilisé pour désulfurer les scories de reformage avant qu'elles ne passent dans le dispositif de minéralisation de CO₂ (50) des déchets solides industriels.

10. Système selon l'une quelconque des revendications 6-9, comprenant un dispositif de préparation de produit (53) pour produire des produits carbonatés à partir de la phase liquide claire après le dispositif de séparation solide-liquide (52).
